# DEMANDE DE BREVET EUROPEEN

(11) **EP 0 817 206 A1**
(43) Date de publication de la demande: **07.01.1998**
(21) Numéro de dépôt: 97401453.2
(22) Date de dépôt: 23.06.1997
(51) Int. Cl.: G21C 17/06, G01B 7/34

(54) **Procédé et dispositif de contrôle géométrique d'un tube guide**

(30) Priorité: 26.06.1996 FR 9607927
(71) Demandeur: FRAMATOME, 92400 Courbevoie (FR); COMPAGNIE GENERALE DES MATIERES NUCLEAIRES, F-78140 Velizy Villacoublay (FR)
(72) Inventeur: Descot, Pascal, 42400 Saint-Chamond (FR); Fichet, Bruno, 71240 Saint-Loup-De-Varennes (FR)
(74) Mandataire: Fort, Jacques

(57) **Abrégé**

Le dispositif est destiné à contrôler la rectitude d'un tube guide (10) comprenant une zone (16) de diamètre réduit dans sa partie terminale. Il comprend une canne (18) dont une partie distale présente successivement, à partir de l'extrémité de la canne, un renflement de guidage (25) ayant un diamètre lui permettant de traverser à frottement doux la zone de diamètre réduit et deux bossages dont le plus proche du renflement porte au moins deux jeux orthogonaux de capteurs diamétralement opposés, munis de conducteurs de liaison avec l'extrémité proximale de la canne. Il comprend également un fourreau (20) capable de coulisser dans la partie courante du tube guide et sur la canne et de venir en butée contre la zone étranglée, le déplacement du fourreau vers la partie distale étant limité par un appui de butée sur la canne (18) dans une position déterminée où le fourreau entoure la canne.

## Description

La présente invention a pour objet le contrôle de la rectitude d'un tube guide d'assemblage combustible nucléaire, ce tube guide comprenant une zone de diamètre réduit dans sa partie terminale.

Les tubes guides d'assemblage combustible présentent souvent une zone de diamètre réduit à leur partie basse. Ce diamètre réduit est très peu supérieur à celui d'un crayon de grappe de commande susceptible de descendre dans le tube. La zone de diamètre réduit a pour but de freiner la chute de la grappe par laminage hydraulique du réfrigérant contenu dans le tube.

A l'issue d'un passage en réacteur, l'assemblage combustible peut présenter des déformations donnant au tube guide une forme non rectiligne. Il est important de déceler l'existence et l'importance de telles déformations, avant rechargement dans le réacteur pour garantir le libre passage des crayons de grappe de réglage dans les tubes guides.

L'invention vise à fournir un dispositif et un procédé permettant d'obtenir un tracé des déformations intérieures d'un tube guide, utilisables alors que l'assemblage est maintenu sous eau, et cela de préférence en utilisant, pour provoquer les déplacements relatifs requis, les moyens qui sont nécessaires à la manutention de l'assemblage combustible.

Dans ce but, l'invention propose notamment un dispositif comprenant une canne dont une partie distale présente successivement, à partir de l'extrémité de la canne, un renflement de guidage ayant un diamètre lui permettant de traverser à frottement doux la zone de diamètre réduit et deux bossages dont au moins le plus proche du renflement porte au moins deux jeux de capteurs de contrainte diamétralement opposés, munis de conducteurs de liaison avec l'extrémité proximale de la canne et comprenant un fourreau capable de coulisser dans la partie courante du tube guide et sur la canne et de venir en butée contre la zone étranglée, le déplacement du fourreau vers la partie distale étant limité par un appui de butée sur la canne dans une position déterminée où le fourreau entoure la canne.

Les capteurs de contrainte peuvent être constitués par des jauges de contrainte résistives fixées sur la canne et fournissant un signal de sortie qui est une fonction croissante des contraintes et des déformations subies par la canne. Pour en faciliter la fabrication, cette canne sera constituée en deux parties, dont l'une porte les capteurs.

L'ensemble constitué par la canne appareillée et le fourreau constitue un ensemble qui, lors de l'utilisation du dispositif, est raccordé à une unité de mesure par les conducteurs de liaison. Le dispositif sera généralement complété par des moyens permettant de déterminer l'orientation relative de la canne et du tube guide.

Ainsi, le dispositif peut, à partir des déformations mesurées dans deux directions mutuellement orthogonales, transversales à l'axe du tube exploré, fournir un tracé de l'amplitude et de l'orientation des déformations à tous les niveaux de la zone de diamètre réduit.

Le dispositif peut également être utilisé pour mesurer les déformations éventuelles du tube en dehors de la zone de diamètre réduit ; pour cela, on munit les bossages de bagues dont le diamètre externe est tel qu'elles glissent à frottement doux dans la partie courante du tube guide.

L'invention propose également un procédé mettant en oeuvre un ensemble du genre défini ci-dessus, suivant lequel on insère ledit ensemble dans le tube guide par déplacement relatif du tube guide et de l'ensemble jusqu'à venue en butée du fourreau contre la zone étranglée, on provoque des déplacements relatifs du tube guide et de la canne de façon à faire balayer par les bossages la totalité de la zone de diamètre réduit, et on déduit l'amplitude et l'orientation des déformations des signaux fournis par les capteurs et d'une mesure du déplacement de la canne le long de l'axe du tube guide.

Les caractéristiques ci-dessus ainsi que d'autres, avantageusement utilisables en liaison avec les précédentes mais pouvant l'être indépendamment, apparaîtront à la lecture de la description qui suit d'un mode particulier de réalisation, donné à titre d'exemple non limitatif. La description se réfère aux dessins qui l'accompagnent, dans lesquels :
- la figure 1 est un schéma, destiné à montrer l'ensemble de mesure d'un dispositif suivant l'invention, en place dans un tube-guide ;
- la figure 2 est une vue de l'ensemble en coupe longitudinale ;
- la figure 3 est une vue de dessous de l'ensemble ; et
- la figure 4 montre schématiquement l'ascenseur d'une installation de manutention en piscine permettant de mettre en oeuvre le procédé.

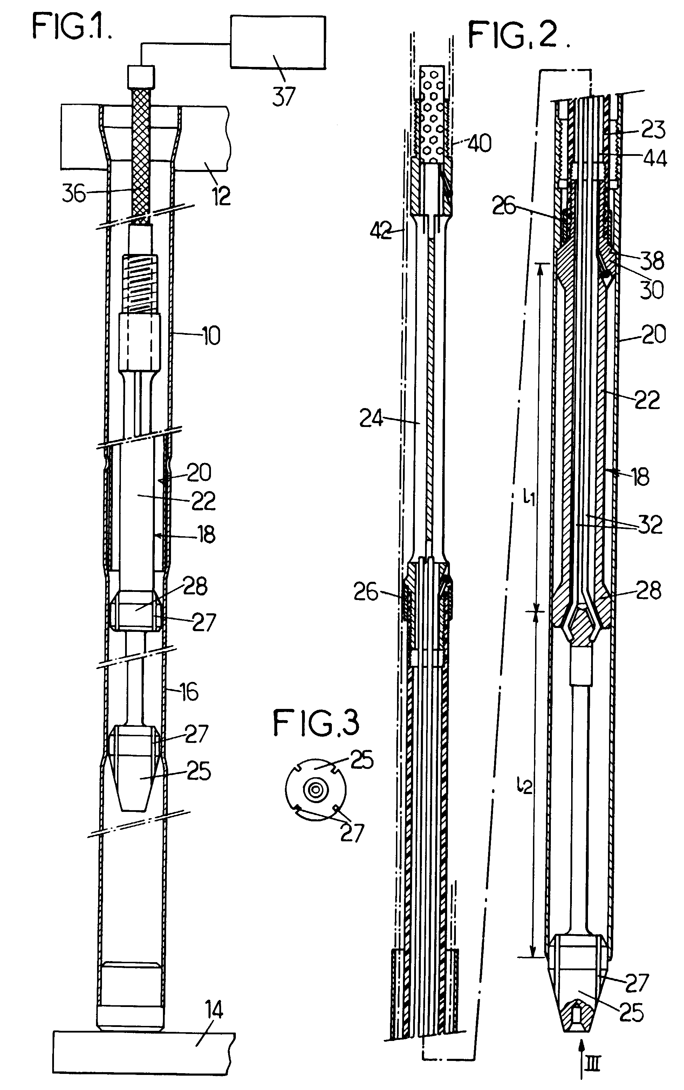

Le dispositif dont les éléments essentiels sont montrés en figure 1 est destiné à mesurer les déformations d'un tube guide 10 reliant l'embout supérieur 12 et l'embout inférieur 14 d'un assemblage combustible nucléaire. Ce tube guide présente, à proximité de son extrémité basse et dans certains cas jusqu'à cette extrémité, une zone 16 de diamètre réduit dont les déformations éventuelles peuvent avoir des conséquences graves, notamment le coincement d'un crayon de grappes de commande. Le dispositif, tel qu'il est représenté, permet de mesurer les déformations du tube guide à ce niveau, donc de donner par exemple le tracé de l'axe du tube guide dans la zone de diamètre réduit.

Le dispositif peut être regardé comme comprenant une canne de mesure 18 et un fourreau 20 mobiles l'un par rapport à l'autre en direction axiale (c'est-à-dire verticalement lorsque l'assemblage est dans son orientation normale). La canne 18 est elle-même en plusieurs pièces assemblées, de façon à faciliter sa fabrication et à ajuster sa flexibilité à chaque niveau. Dans le cas illustré en figure 2, elle comprend un corps de sonde tubulaire 22, une gaine souple ou articulée 23 et un boîtier de câblage 24. L'extrémité haute taraudée du corps de sonde tubulaire est vissée sur la partie terminale filetée de la gaine souple. Cette gaine est elle-même bloquée sur le boîtier de câblage et une bague 26 peut être prévue autour de la liaison pour éviter un éclatement.

Le corps de sonde 22 se présente sous forme d'une tige entre un renflement terminal de guidage 25 de diamètre tel qu'il puisse traverser à frottement doux la zone de diamètre réduit et un premier bossage 28 pouvant circuler à frottement doux dans cette zone. Des fentes 27 dans le renflement terminal de guidage permettent le passage du réfrigérant le long du tube, lors des mesures en piscine.

Entre le premier bossage 28 et un second bossage 30, de même diamètre que le premier bossage 28 et que le renflement 25, le corps de sonde est creux pour constituer un conduit central de passage de gaines 32, au nombre de quatre par exemple, contenant des conducteurs de raccordement de capteurs de mesure avec l'extérieur. Des cannelures ménagées dans les bossages, similaires aux fentes 27, permettent le passage du réfrigérant.

Les écartements 1₁ et 1₂ entre le renflement terminal de guidage 25, le premier bossage 28 et le second bossage 30, sont beaucoup plus faibles que la longueur axiale de la zone de diamètre réduit, pour permettre de mesurer la déformation de la zone de diamètre réduit le long de cette dernière. On peut par exemple adopter 1₁ = 1₂ = 60 mm pour une longueur totale de la zone d'environ 500 mm.

Le corps de sonde 22 a une flexibilité lui permettant de fléchir pour s'adapter aux déformations de la zone étranglée, qui provoquent des contraintes mesurées par les capteurs. Un jeu de capteurs est placé à proximité du premier bossage. Il comporte au moins quatre capteurs régulièrement répartis autour de l'axe, pour que leurs signaux de sortie permettent de calculer l'amplitude et l'orientation des déformations éventuelles. Les capteurs associés au premier bossage 28 peuvent être fixés à la tige immédiatement au-dessous de ce bossage et reliés aux conducteurs par des trous obliques percés dans le premier bossage. D'autres capteurs peuvent être associés au second bossage pour effectuer également une mesure. Toutefois, le second bossage ne servira généralement qu'à guider le corps de sonde.

Le boîtier 24 peut être formé par une tige, par exemple cruciforme pour délimiter des passages destinés aux gaines 32. L'extrémité haute renflée du boîtier reçoit l'extrémité d'un câble électrique 36 de liaison avec un appareil de mesure 37 placé à distance. L'extrémité basse, également renflée, du boîtier 24 est fixée à la gaine 23. Pour lui donner la souplesse requise, cette gaine pourra par exemple être en matière synthétique, alors que les autres parties de la canne de mesure sont en métal, en acier inoxydable par exemple.

Le fourreau 20 présente une longueur légèrement supérieure à 1₁+1₂. Son diamètre extérieur est constant et lui permet de coulisser à frottement doux dans la partie courante du tube guide. Mais ce diamètre extérieur est suffisamment élevé pour que le fourreau bute contre le début de la zone de diamètre réduit du tube guide, lorsque l'ensemble constitué par la canne et le fourreau descend dans le tube guide.

Le diamètre intérieur du fourreau 20 est tel qu'il peut coulisser sur le renflement terminal et les bossages, sauf à sa partie supérieure qui présente un épaulement 38 d'appui sur le bossage 30. Ce diamètre intérieur assure de plus la continuité avec la zone de diamètre réduit.

La canne de mesure 18 et le fourreau 20 sont prévus pour être raccordables à des tubes de manoeuvre respectifs 40 et 42 dont une fraction est représentée en traits mixtes sur la figure 2. Ces tubes sont reliés à des mécanismes de manoeuvre permettant de les monter et de les descendre.

Enfin, pour pallier les risques de rupture de liaison, le boîtier 24 est relié au corps de sonde 22 par au moins un câble de secours 44 dont les extrémités peuvent être soudées dans des trous obliques ménagés respectivement dans un embout inférieur du boîtier 24 et dans le second bossage 30.

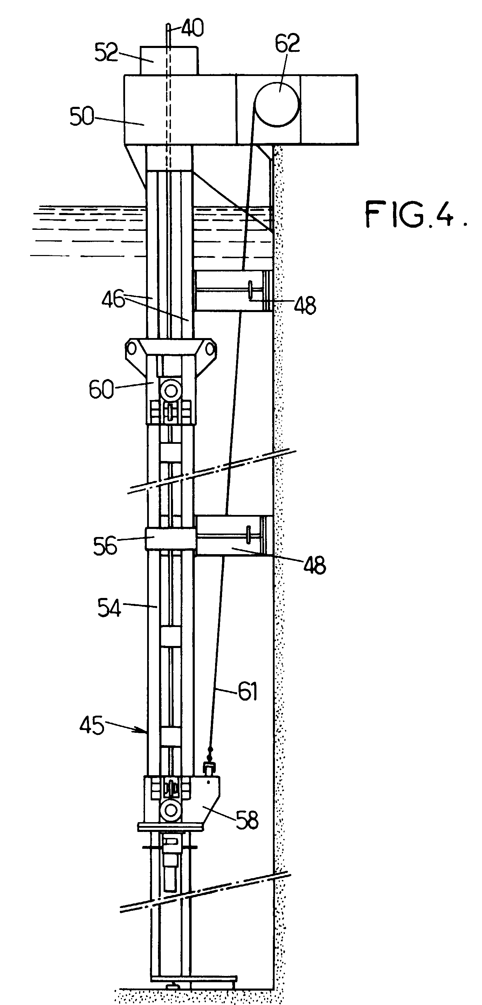

On décrira maintenant, en faisant référence à la figure 4, un procédé de contrôle utilisant un dispositif du genre déjà décrit. La figure 4 montre un ascenseur 45 monté contre la paroi d'une piscine de stockage, comprenant une cage fixe, formée par deux paires de rails verticaux 46 fixés à la paroi par des bras 48 et surmontés d'une plate-forme 50. Sur cette plate-forme peut être fixé un mécanisme 52 de manoeuvre des tubes 40 et 42. Une nacelle 54 de réception d'un assemblage, placée entre les rails de la cage, est constituée de longerons reliés par des cadres, d'un fond 58 et d'une goulotte d'entrée 60. Le fond et la goulotte sont munis de galets de guidage vertical de la nacelle. Le fond 58 est accroché à un câble de manoeuvre 61 enroulé sur le tambour d'un treuil 62.

La séquence d'opérations peut alors être la suivante. Un assemblage à contrôler est placé dans la nacelle et celle-ci est descendue à l'aide d'un treuil. L'ensemble canne-fourreau est descendu dans le tube guide à contrôler, en repérant son orientation, (par exemple en faisant coïncider un repère porté par la canne ou le tube de manoeuvre) jusqu'à ce que tous les bossages aient dépassé la zone de diamètre réduit. A partir du moment où l'extrémité du fourreau 20 vient en appui sur la zone de diamètre réduit, le fourreau se déplace par rapport à la canne, ce qui permet de disposer d'une référence d'origine pour la mesure.

Lorsque la position d'appui du fourreau sur la zone de diamètre réduit est atteinte, on immobilise la canne verticalement, le fourreau restant libre. Le treuil 62 est mis en marche pour lever l'assemblage à vitesse constante. L'assemblage posé dans la nacelle monte à vitesse constante alors que la canne reste fixe et que le fourreau monte également. Au cours de ce mouvement de montée, les deux couples de capteurs fournissent des signaux représentatifs de la déformation de la tige suivant deux directions mutuellement orthogonales. L'appareil de mesure à distance 37 comporte des moyens de mémorisation et des moyens de calcul de la déformation suivant les deux directions orthogonales. Ces moyens de calcul effectuent également une sommation vectorielle suivant les deux directions orthogonales. Simultanément, le déplacement de l'assemblage est relevé. On obtient ainsi la courbe représentative de la déformée sur toute la longueur de la partie de diamètre réduit 16.

Le mécanisme 52 de manoeuvre des tubes peut être muni d'un capteur d'effort qui détecte la venue de la canne en butée contre le bouchon inférieur du tube guide. Cette détection peut provoquer la remontée automatique de la canne ou l'inversion du mouvement de l'ascenceur. Une seconde mesure peut être effectuée au cours de ce mouvement de sens inverse.

Le dispositif permet également de contrôler la partie courante du tube guide en ajoutant des bagues calibrées sur le renflement 25 et les bossages 28 et 30. Ces bagues ont un diamètre tel qu'elles peuvent glisser à frottement doux dans la partie courante.

Pour améliorer la précision de la mesure, un nombre de paires de capteurs supérieur à deux peut être prévu. En particulier, trois jeux de capteurs peuvent être placés à 60° l'un de l'autre.

## Revendications

1. Dispositif de contrôle de la rectitude d'un tube guide (10) d'assemblage combustible nucléaire, comprenant une zone (16) de diamètre réduit dans sa partie terminale, comprenant une canne (18) dont une partie distale présente successivement, à partir de l'extrémité de la canne, un renflement de guidage (25) ayant un diamètre lui permettant de traverser à frottement doux la zone de diamètre réduit et deux bossages dont le plus proche du renflement porte au moins deux jeux orthogonaux de capteurs de mesure diamétralement opposés munis de conducteurs de liaison avec l'extrémité proximale de la canne et comprenant un fourreau (20) capable de coulisser dans la partie courante du tube guide et sur la canne et de venir en butée contre la zone étranglée, le déplacement du fourreau vers la partie distale étant limité par un appui de butée sur la canne (18) dans une position déterminée où le fourreau entoure la canne.

2. Dispositif selon la revendication 1, caractérisé en ce que les capteurs de mesure sont constitués de jauges de contrainte résistives fixées sur la canne et fournissant un signal de sortie qui est une fonction croissante des contraintes et des déformations subies par la canne.

3. Dispositif selon la revendication 1 ou 2, caractérisé en ce qu'il comprend de plus des bagues placées autour des bossages et du renflement, ayant un diamètre tel qu'elles glissent à frottement doux dans la partie courante du tube guide.

4. Dispositif selon la revendication 1, 2 ou 3, caractérisé en ce que la canne comprend un corps de sonde tubulaire (22) muni du renflement et des bossages, une gaine souple ou articulée (23) et un boîtier de câblage (24).

5. Dispositif selon la revendication 4, caractérisé en ce que le corps de sonde se présente sous forme d'une tige creuse entre les deux bossages pour constituer un conduit central de passage de gaines contenant des conducteurs de raccordement avec les capteurs de mesure.

6. Dispositif selon l'une quelconque des revendications précédentes, caractérisé en ce que les écartements entre le renflement terminal de guidage (25), le premier bossage (28) et le second bossage (30) sont beaucoup plus faibles que la longueur axiale de la zone de diamètre réduit.

7. Dispositif selon la revendication 6, caractérisé en ce que la distance entre le renflement terminal de guidage (25) et le premier bossage est égale à la distance entre le premier bossage et le second bossage.

8. Dispositif selon l'une quelconque des revendications précédentes, caractérisé en ce qu'il comporte de plus des moyens de fixation de tubes de manoeuvre respectifs (40,42) destinés à être raccordé à un mécanisme de manoeuvre (52).

9. Procédé de contrôle de la rectitude d'un tube guide d'assemblage combustible nucléaire, ce tube guide comprenant une zone de diamètre réduit dans sa partie terminale, suivant lequel on introduit un ensemble comprenant une canne dont une partie distale présente successivement, à partir de l'extrémité de la canne, un renflement de guidage ayant un diamètre lui permettant de traverser à frottement doux la zone de diamètre réduit et deux bossages portant chacun au moins deux jeux orthogonaux de capteurs de contrainte diamétralement opposés munis de conducteurs de liaison avec l'extrémité proximale de la canne et comprenant un fourreau capable de coulisser dans la partie courante du tube guide et sur la canne et de venir en butée contre la zone étranglée, le déplacement du fourreau vers la partie distale étant limitée par un appui de butée sur la canne dans une position déterminée où le fourreau entoure la canne, suivant lequel on insère ledit ensemble dans le tube guide par déplacement relatif du tube guide et de l'ensemble jusqu'à venue en butée du fourreau contre la zone étranglée, on provoque des déplacements relatifs du tube guide et de la canne de façon à faire balayer par les bossages la totalité de la zone de diamètre réduit, et on déduit l'amplitude et l'orientation des déformations des signaux fournis par les capteurs et d'une mesure du déplacement de la canne le long de l'axe du tube guide.

10. Procédé selon la revendication 9, caractérisé en ce que l'on contrôle également la partie courante du tube après adjonction de bagues calibrées sur le renflement (25) et les bossages (28,30).
